# EUROPEAN PATENT APPLICATION

(11) **EP 2 295 752 A1**
(43) Date of publication of application: **16.03.2011**
(21) Application number: 10005143.2
(22) Date of filing: 17.05.2010
(51) Int. Cl.: F01N 3/20

(54) **Exhaust aftertreatment system with heated device**

(30) Priority: 29.07.2009 US 511132
(71) Applicant: International Engine Intellectual Property Company, LLC., Warrenville, IL 60555 (US)
(72) Inventor: Griffin, Gregory, A., 60139 Glendale Heights, IL (US); Strots, Vadim, 60130 Forest Park, IL (US)
(74) Representative: Kuhnen & Wacker

(57) **Abstract**

An exhaust aftertreatment system (10) for a vehicle having an engine (14) includes a fluid passageway (20) extending from the engine to an ambient (18) for fluidly communicating exhaust gas (F), and a NOx reduction catalyst (28) disposed on the fluid passageway and downstream of the engine. An injector (34) is disposed downstream of the engine (14) and upstream of the NOx reduction catalyst (28) on the fluid passageway (20) for injecting a reductant (36) into the fluid passageway. A heated mesh device (44) is disposed on the fluid passageway downstream of the injector (34) and upstream of the NOx reduction catalyst (28). The reductant (36) that is injected from the injector (34) impinges on the heated mesh device (44).

## Description

### BACKGROUND

Embodiments described herein relate to a system, method and device for evaporating liquid reductant injected into a gas stream. More specifically, embodiments described herein relate to a system, method and device for evaporating an emission reductant, such as urea, into an exhaust gas stream of an aftertreatment system of a vehicle, such as an SCR system.

Diesel engine combustion results in the formation of nitrogen oxides (NOx) in the exhaust gas. Typically, urea selective catalytic reduction systems (urea SCR systems) are used to reduce NOx from engines. Urea SCR systems rely on injection of aqueous urea solution, which is injected into the exhaust line of a vehicle upstream of an SCR catalyst. In the SCR catalyst, the NOx is reduced by ammonia, and the emission from the catalyst is N₂, H₂O and CO₂.

For efficient performance, the emission reductant, for example urea for SCR systems, must be injected into the engine exhaust gas, evaporized and decomposed before reaching the inlet of the aftertreatment catalyst. The characteristic time of the evaporation of the reductant depends on the physical properties of the reductant, the injection characteristics, and the energy of the exhaust gas. The heat required for evaporating most reductants is high. For example, a urea solution is injected into the system at an ambient temperature and typically needs to be heated above 150°C or 200°C to evaporate the water and to decompose the remaining urea into ammonia and isocyanic acid.

When the urea or other reductant is sprayed into the system, the exhaust gas velocity is high, and the exhaust gas stream carries the large droplets at a high velocity to the catalyst. As a result, the characteristic time of the reductant evaporation can be larger than the travel time to the catalyst. If the evaporation and the decomposition are not complete, the SCR catalyst performance is reduced due to insufficient availability of reductant.

Additionally, if the urea solution is not evaporated and decomposed before hitting an inner surface of the exhaust gas pipe, which is at a cooler temperature due to it being exposed to the ambient, the urea solution will remain liquid and will not decompose. Further, the urea can form a solid deposit on the inner surface of the exhaust gas pipe.

To facilitate evaporation and decomposition of the reductant, a mixer may be installed in front of the SCR catalyst. Additionally, the reductant injector may be placed as far away as possible upstream of the SCR catalyst. However, without sufficiently high exhaust temperatures, poor evaporation and decomposition of the urea solution can occur, and solid deposits can form on the mixer and the walls of the exhaust system. Solid urea deposition can decrease the flow area of the exhaust pipe, resulting in an increased pressure drop and higher exhaust gas velocity in the pipe, which can in turn, result in urea deposition at the downstream catalyst. Eventually, the solid deposits can lead to clogging of the exhaust system, and reduced NOx conversion efficiency.

### SUMMARY OF THE INVENTION

An exhaust aftertreatment system for a vehicle having an engine includes a fluid passageway extending from the engine to an ambient for fluidly communicating exhaust gas, and a NOx reduction catalyst disposed on the fluid passageway and downstream of the engine. An injector is disposed downstream of the engine and upstream of the NOx reduction catalyst on the fluid passageway for injecting a reductant into the fluid passageway. A heated mesh device is disposed on the fluid passageway downstream of the injector and upstream of the NOx reduction catalyst. The reductant that is injected from the injector impinges on the heated mesh device.

### BRIEF DESCRIPTION OF THE DRAWINGS

FIG. 1 is a schematic of an exhaust aftertreatment system having a heated mesh device located downstream of an injector and upstream of a NOx reduction catalyst.

FIG. 2 is a front elevation view of the mesh device of FIG. 1.

### DETAILED DESCRIPTION

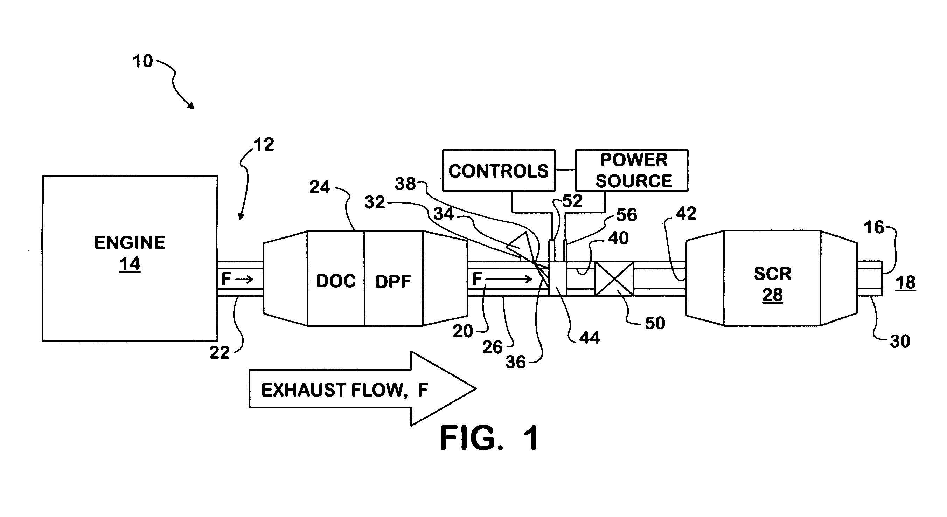

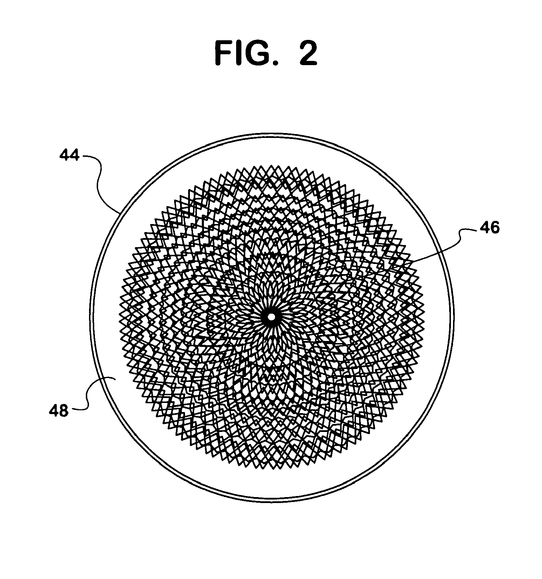

Referring now to FIGs. 1 and 2, an SCR system (or other exhaust aftertreatment system), is indicated generally at 10, and has an exhaust pipe assembly 12 extending from an engine 14 to an outlet 16, such as the outlet to an ambient 18. The exhaust pipe assembly 12 forms a fluid passageway 20 for the flow of exhaust gas F from the engine 14 to the ambient 18. A first portion 22 of the exhaust pipe assembly 12 extends from the engine 14 to a diesel oxidation catalyst/diesel particulate filter 24 (DOC/DPF). A reductant pipe 26 of the exhaust pipe assembly 12 extends from the DOC/DPF 24 to a NOx reduction catalyst 28, such as a selective catalytic reduction catalyst (SCR catalyst). A third portion 30 of the exhaust pipe 12 assembly extends from the SCR catalyst 28 to the outlet 16. It is possible that the SCR system 10 of FIG. 1 can have other configurations, for example, the reductant pipe 26 can be placed between the DOC and the SCR catalyst 28, followed by a DPF, or the reductant pipe 26 can be installed between the DOC and a substrate that combines the functions of the SCR catalyst and the DPF, among other configurations.

Mounted on a mounting boss 32 on the reductant pipe 26 between the DOC/DPF 24 and the SCR catalyst 28 is an injector 34 for spraying a reductant 36, such as a urea solution, into the flow of exhaust gas F. The injector 34 can be mounted externally to the reductant pipe 26, with a nozzle 38 of the injector 34 being located at or in fluid communication with an interior surface 40 of the reductant pipe 26 such that the sprayed urea or other reductant 36 is in fluid communication with the fluid passageway 20 and the flow of exhaust gas F. The urea solution 36 is stored in a tank (not shown) and pumped to the injector 34 with a pump (not shown) for injection into the reductant pipe 26.

After being emitted from the engine 14 and flowing through the DOC/DPF 24, the exhaust gas F flows through the reductant pipe 26 of the exhaust pipe assembly 12 where the injector 34 injects urea 36 into the exhaust gas flow. The urea 36 is injected generally at an ambient temperature, and typically needs to be heated above at least 200-degrees Celsius to be evaporized and decomposed in the exhaust gas F before reaching an inlet 42 of the SCR catalyst 28. The urea 36 is heated by the energy of the exhaust gas F emitted from the engine 14. However, the characteristic time of the urea or other reductant 36 evaporation may still be larger than the travel time to the catalyst 28, and solid deposits can form on the interior surface 40 of the reductant pipe 26, on the SCR catalyst 28, and on any other components downstream of the injector 34 on the SCR system 10.

Downstream of the injector 34, a heated mesh device 44 is mounted inside the reductant pipe 26 and is configured to receive all or substantially all of the flow of the exhaust gas F through the heated mesh device. The heated mesh device 44 includes a wire mesh portion 46 that permits the flow of exhaust gas F therethrough, without creating a substantial backpressure upstream of the heated mesh device. It is possible that the wire mesh portion 46 is a grid, a plurality of grids, or other shape that is capable of permitting the flow of exhaust gas F therethrough without creating a substantial backpressure, and that is capable of being heated to temperatures sufficient to evaporate and decompose the urea or other reductant solution 36.

The heated mesh device 44 may include a support ring 48 that at least partially axially encloses the wire mesh portion 46, where the support ring is attached to the interior surface 40 of the reductant pipe 26, or alternatively, the heated mesh device may be directly attached to the reductant pipe. The heated mesh device 44 may be generally cylindrical or disk-shaped, however other shapes are possible.

The heated mesh device 44 is mounted in the aftertreatment system 10 upstream of the SCR catalyst 28, and can be mounted by brazing the heated mesh device 44 to the reductant pipe 26, or can be mechanically attached to the reductant pipe, for example with a rib stop or with retainer rings. It is also possible that the heated mesh device 44 is attached to a pipe that is attached to the reductant pipe 26, so that the heated mesh device and the attached pipe are attached to two portions of the reductant pipe. Alternatively, the heated mesh device 44 may be located between two portions of the reductant pipe 26 without a separate attached pipe. The reductant pipe 26 and the wire mesh device 44 fluidly communicate exhaust flow F from the DOC/DPF 24 to the SCR catalyst 28 without the loss of exhaust gas between the DOC/DPF and the SCR catalyst.

The heated mesh device 44 is positioned downstream of the injector 34 such that the spray of urea 36 impinges on the heated mesh device, which minimizes or avoids the urea contacting and or crystallizing at the interior surface 40 of the exhaust pipe assembly 12. The urea 36 decomposes on the heated mesh device 44 and the heated mesh device distributes ammonia to the SCR catalyst 28. The heated mesh device 44 can be partially or entirely coated with TiO₂ or other suitable material serving as a hydrolysis catalyst that hydrolyzes HNCO into ammonia. A stationary mixer 50 may be located downstream of the heated mesh device 44 and upstream of the SCR catalyst 28.

The flow of exhaust gas F through the heated mesh device 44 is a winding path through the wire mesh portion 46, which provides increased surface area over the wire mesh to transfer heat from the mesh device to the exhaust gas. The wire mesh material may be crimped at angles of about 10 to 30-degrees, however other angles are possible. Additionally, a crimp height and a crimp distance of the material can be varied. The crimp pattern of the wire mesh material can be in a herringbone pattern, a 10-degree straight pattern, and a 30-degree straight pattern, however other crimp patterns are possible.

The material of the heated mesh device 44 may include varying amounts chromium, aluminum, iron, nickel, and carbon, although other materials are possible. In one example material, there is about 18-20% Chromium, 68-74% Iron, 8-12% Nickel, and 0.08% Carbon. In another example material, there is about 24-26% Chromium, 48-55% Iron, 19-22% Nickel, and 0.08% Carbon. In a third example, there is about 22% Chromium, 4.8% Aluminum, and 73.2% Iron. The melting point of the material may be about 1400 or 1500-degrees Celsius, with a maximum operating temperature of the heated mesh device being about 900 to 1300-degrees Celsius. The density of the material may be about 7.25 to 8.1 g/cm³, however other densities are possible. The electric resistivity may be about 0.72 to 1.35 µohm-m at 20-degrees Celsius, however other amounts of resistivity are possible. Further, the material may have a coefficient of thermal expansion from about 11 to 17 µm/m K, thermal conductivity of about 11 to 16.2 W/m K, and a specific heat of about 0.46 to 0.5 kJ/kg K.

A sensor 52 senses the temperature of the heated mesh device 44 and communicates the temperature to a control system 54. When the temperature of the heated mesh device 44 is below a predetermined minimum temperature, for example 200-degrees Celsius, the control system 54 actuates a heater 56 to heat the heated mesh device 44, such as by electrically heating. Electrically heating the heated mesh device 44 provides a fast heating response time. Alternatively, the heater may be a coolant heater 56, where heated coolant can be used to transfer heat to the heated mesh device 44. The coolant can be routed through or near high temperature components, for example the exhaust system, where the coolant is heated, and then the coolant is routed to the mesh device 44. It is possible that the heated mesh device 44 is insulated so as not to impact other portions of the vehicle.

A power source 58 provides power to the heater 56 to heat the heated mesh device 44. The heater 56 maintains the heated mesh device 44 above the predetermined temperature. It is possible that the predetermined temperature can be variable, and that the heater 56 can be both automatically actuated and manually actuated.

When the injector 34 sprays the urea or other reductant solution 36 towards the heated mesh device 44, the urea solution is minimized or prevented from hitting the colder exhaust pipe assembly 12 (which is surrounded by ambient air), and instead contacts the wire mesh portion 46. Since the wire mesh portion 46 of the heated mesh device 44 is heated to a minimum predetermined temperature, for example at least 200 degrees Celsius, the urea solution 36 can continue to evaporate. Additionally, since the urea solution 36 does not contact the exhaust pipe assembly 12, the pipe can be made of less expensive steel or other less-corrosion resistant materials.

The temperature of the urea or other reductant solution 36 is increased due to contact with the mesh, which improves evaporation. The lifetime of the urea droplet becomes shorter due to the contact with the mesh device 44. The result is that there is improved evaporation of the urea or other reductant 36, improved efficiency of the SCR system 10, reduced solid urea buildup, and reduced corrosion of the exhaust pipe assembly 12. With the increased efficiency in the SCR system 10, the distance between the injector 34 and the SCR catalyst 28 may be decreased.

## Claims

1. An exhaust aftertreatment system for a vehicle having an engine, the aftertreatment system comprising:
a fluid passageway extending from the engine to an ambient for fluidly communicating exhaust gas;
a NOx reduction catalyst disposed on the fluid passageway downstream of the engine;
an injector disposed downstream of the engine and upstream of the NOx reduction catalyst on the fluid passageway for injecting a reductant into the fluid passageway; and
a heated mesh device disposed on the fluid passageway downstream of the injector and upstream of the NOx reduction catalyst, wherein the reductant injected from the injector impinges on the heated mesh device.

2. The exhaust aftertreatment system of claim 1 further comprising a heater that maintains a minimum temperature of the heated mesh device at a predetermined temperature.

3. The exhaust aftertreatment system of claim 2 further comprising a sensor that senses the temperature of the heated mesh device and communicates the temperature to a control system.

4. The exhaust aftertreatment system of claim 3 wherein when the temperature of the heated mesh device is below the predetermined temperature, the control system actuates the heater to heat the heated mesh device.

5. The exhaust aftertreatment system of claim 2 wherein the predetermined temperature is about 200-degrees Celsius.

6. The exhaust aftertreatment system of claim 2 wherein the heater electrically heats the heated mesh device.

7. The exhaust aftertreatment system of claim 1 wherein the heated mesh device comprises a wire mesh portion that permits the flow of exhaust gas therethrough.

8. The exhaust aftertreatment system of claim 7 wherein the heated mesh device further comprises a support ring that axially encloses the wire mesh portion.

9. The exhaust aftertreatment system of claim 7 wherein the wire mesh is at least partially coated with a urea hydrolysis catalyst.

10. The exhaust aftertreatment system of claim 1 wherein the fluid passageway is defmed by a reductant pipe extending between a diesel oxidation catalyst and the NOx reduction catalyst, wherein the heated mesh device is attached to an interior surface of the reductant pipe.

11. A method of evaporating a reductant in an aftertreatment system of an engine, the method comprising:
providing a fluid passageway from the engine to an ambient;
injecting a reductant into the fluid passageway with an injector;
impinging the reductant onto a mesh device downstream of the injector on the fluid passageway; and
heating the mesh device to a predetermined minimum temperature.

12. The method of claim 11 further comprising the steps of sensing the temperature of the mesh device with a sensor.

13. The method of claim 12 further comprising the steps of communicating the temperature to a control system, wherein if the temperature is below the predetermined minimum temperature, the control system actuates a heater to heat the mesh device.

14. The method of claim 11 further comprising the step of at least partially coating the mesh device with a urea hydrolysis catalyst.

15. The method of claim 11 wherein the fluid passageway is defined by a reductant pipe, and further comprising the step of brazing the mesh device to the reductant pipe.

16. A mesh device for an SCR system of an engine having a reductant pipe with an interior surface, the mesh device comprising:
a wire mesh portion that permits a flow of exhaust gas therethrough;
a support ring that at least partially axially encloses the wire mesh portion, wherein the support ring is configured for attachment to the interior surface of the reductant pipe; and
a heater for heating the wire mesh portion.

17. The mesh device of claim 16 wherein the wire mesh portion is at least partially coated with a urea hydrolysis catalyst.

18. The mesh device of claim 16 wherein the mesh device is made of chromium, iron, nickel, and carbon.

19. The mesh device of claim 16 wherein the wire mesh portion is a grid.

20. The mesh device of claim 16 wherein the mesh device is heated electrically.
